# EUROPEAN PATENT APPLICATION

(11) **EP 4 752 839 A1**
(43) Date of publication of application: **03.06.2026**
(21) Application number: 24844456.4
(22) Date of filing: 17.06.2024
(51) Int. Cl.: G06T 11/60

(54) **IMAGE GENERATION METHOD AND APPARATUS, DEVICE, MEDIUM, AND PROGRAM PRODUCT**

(30) Priority: 25.07.2023 CN 202310921622
(71) Applicant: Beijing Zitiao Network Technology Co., Ltd., Beijing 100190 (CN)
(72) Inventor: LIU, Fei, Beijing 100028 (CN); LIU, Wei, Beijing 100028 (CN); CHENG, Yufeng, Beijing 100028 (CN)
(74) Representative: Marks & Clerk LLP
(86) International application number: PCT/CN2024/099576
(87) International publication number: WO 2025/020761

(57) **Abstract**

The present disclosure provides an image generation method and apparatus, a device, a storage medium and a program product. The method comprises: determining information about a prompt text and an image style; generating an initial image with the image style based on the semantic information of the prompt text; performing a transparency process on a non-target region of the initial image to obtain a target image having transparent channel information.

## Description

### CROSS REFERENCE TO RELATED APPLICATIONS

The present disclosure claims a priority right to the Chinese patent application No. 202310921622.7 entitled "Image Generation method and Apparatus, Device, Medium and Program Product" and filed on July 25, 2023 with China National Intellectual Property Administration, the entire disclosure of which is hereby incorporated by reference in its entirety.

### FIELD

The present disclosure relates to the field of computer technology, and particularly to an image generation method and apparatus, a device, a medium and a program product.

### BACKGROUND

In some applications, users often use sticker elements to process image data, to enrich the expression forms of image data such as pictures and videos. The conventional sticker images need to be manually made and completed and incur high production costs, long cycles and difficulty in meeting aesthetic standards, and the users are unable to produce sticker images that meet their expectations.

### SUMMARY

The present disclosure provides an image generation method and apparatus, a device, a storage medium and a program product, to solve technical problems such as a low production efficiency and an undesirable effect of the sticker images to a certain degree.

In a first aspect of the present disclosure, there is provided an image generation method, comprising:
determining information about a prompt text and an image style;
generating an initial image with the image style based on the semantic information of the prompt text; and
performing a transparency process on a non-target region of the initial image to obtain a target image having transparent channel information.

In a second aspect of the present disclosure, there is provided an image generation apparatus, comprising:
an information determination module configured to determine information about a prompt text and an image style;
an image generation module configured to generate an initial image with the image style based on semantic information of the prompt text; and
a transparency processing module configured to perform a transparency process on a non-target region of the initial image to obtain a target image having transparent channel information.

In a third aspect of the present disclosure, there is provided an electronic device, wherein the electronic device comprises one or more processors, and a memory; and one or more programs, wherein the one or more programs are stored in the memory and executed by the one or more processors, the program(s) comprising instructions for performing the method according to the first aspect or the second aspect.

In a fourth aspect of the present disclosure, there is provided a non-volatile computer readable storage medium containing a computer program which, when executed by one or more processors, causes the processors to perform the method in the first aspect or second aspect.

In a fifth aspect of the present disclosure, there is provided a computer program product comprising computer program instructions which, when running on a computer, cause the computer to perform the method in the first aspect.

It can be seen from the above that the present disclosure provides an image generation method and apparatus, a device, a medium and a program product. The target image having transparent channel information is obtained by generating the initial image according to the semantic information of the prompt text and information about the image style, and then performing the transparency process. The automatic generation of the sticker images can be achieved according to the user's prompt text and the desired image style without requiring manual production, and the production effect and production efficiency of the sticker images can be improved.

### BRIEF DESCRIPTION OF THE DRAWINGS

In order to illustrate the technical solutions in the present disclosure or the related art more clearly, a brief introduction will be given to the figures to be used in the description of the embodiments or the related art. It is obvious that the figures described below are merely embodiments of the present disclosure, and other figures can be obtained by those skilled in the art according to these figures without involving any creative effort.
FIG. 1 illustrates a schematic diagram of an image generation architecture according to an embodiment of the present disclosure.
FIG. 2 illustrates a schematic diagram of a hardware structure of an exemplary electronic device according to an embodiment of the present disclosure.
FIG. 3 illustrates a flowchart of an image generation method according to an embodiment of the present disclosure.
FIG. 4 illustrates a schematic diagram of a target image according to an embodiment of the present disclosure.
FIG. 5 illustrates a schematic diagram of an image generation apparatus according to an embodiment of the present disclosure.

### DETAILED DESCRIPTION OF EMBODIMENTS

The present disclosure will be further described below in detail with reference to the figures and in conjunction with specific embodiments to make objects, technical solutions and advantages of the present disclosure more apparent.

It should be noted that, unless otherwise defined, technical or scientific terms used in embodiments of the present disclosure should have ordinary meaning as understood by one of ordinary skill in the art to which the present disclosure belongs. "First", "second" and the like used in the embodiments of the present disclosure are not intended to denote any order, number or importance, but rather used to distinguish different components. "Include", "contain" or the like are intended to mean that an element or article preceding the word covers an element or article and its equivalents listed after the word, and is not intended to exclude other element or articles. "Connect", "couple" or the like are not limited to a physical or mechanical connection, and may include an electrical connection, either a direct connection or an indirect connection. Terms such as "up", "down", "left" and "right" are only used to denote relative positional relationship. After the absolute position of a described object changes, the relative positional relationship might also change accordingly.

It should be noted that prior to using the technical solutions disclosed in the embodiments of the present disclosure, the user should be notified of the type, scope of use, use scenario, etc. of his personal information involved in the present disclosure and authorization should be obtained from the user in an appropriate manner according to relevant laws and regulations.

For example, in response to reception of the user's active request, prompt information is sent to the user to explicitly prompt the user that an operation he requests to perform needs to obtain and use his personal information. Accordingly, the user may autonomously select, according to the prompt information, whether to provide the personal information to software or hardware such as an electronic device, an application, a server or a storage medium, which executes the operations of the technical solution of the present disclosure.

As an optional but non-limiting implementation, in response to reception of the user's active request, the prompt message may be sent to the user, for example, in the form of a pop-up window in which the prompt message may be presented in a text. In addition, the pop-up window may further carry a selection control for the user to select "agree" or "disagree" to provide the personal information to the electronic device.

It should be understood that the above-described processes of notifying and obtaining the user's authorization are merely illustrative and not to be construed as limiting the implementations of the present disclosure, and that other ways of satisfying relevant laws and regulations may also be applied to the implementations of the present disclosure.

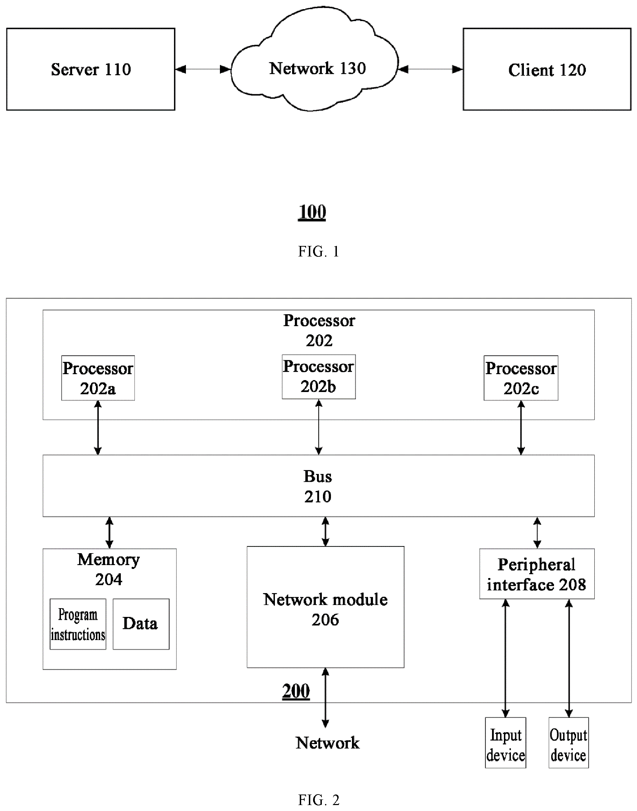

FIG. 1 illustrates a schematic diagram of an image generation architecture according to an embodiment of the present disclosure. Referring to FIG. 1, the image generation architecture 100 may comprise a server 110, a terminal 120, and a network 130 that provides a communication link. The server 110 and the terminal 120 may be connected through a wired or wireless network 130. The server 110 may be an independent physical server, may also be a server cluster or a distributed system composed of a plurality of physical servers, and may also be a cloud server providing basic cloud computing services, such as a cloud service, a cloud database, cloud computing, a cloud function, cloud storage, a network service, cloud communication, a middleware service, a security service and a CDN.

The terminal 120 may be implemented in hardware or software. For example, when implemented in hardware, the terminal 120 may be various electronic devices equipped with a display screen and supporting page display, including but not limited to smartphones, tablet computers, E-book readers, portable laptop computers, desktop computers etc. When implemented in software, the terminal 120 may be installed on the electronic devices listed above; it may be implemented as a plurality of software or software modules (e.g., software or software modules used for providing distributed services), or as a single software or software module, which is not specifically limited herein.

It should be noted that an image generation method according to the embodiment of the present application may be executed by the terminal 120 or the server 110. It should be understood that the number of the terminal, network and server in FIG. 1 is illustrative only and is not intended to limit the number. There may be any number of terminals, networks and servers, depending on implementation needs.

FIG. 2 illustrates a schematic diagram of a hardware structure of an exemplary electronic device 200 according to an embodiment of the present disclosure. As shown in FIG. 2, the electronic device 200 may comprise: a processor 202, a memory 204, a network module 206, a peripheral interface 208, and a bus 210. The processor 202, the memory 204, the network module 206 and the peripheral interface 208 achieve communicative connection therebetween in the interior of the electronic device 200 via the bus 210.

The processor 202 may be a Central Processing Unit (CPU), an image generator, a neural network processor (NPU), a Microcontroller Unit (MCU), a programmable logic device, a Digital Signal Processor (DSP), an Application Specific Integrated Circuit (ASIC), or one or more integrated circuits. The processor 202 may be used to perform functions related to the techniques described in the present disclosure. In some embodiments, the processor 202 may further comprise a plurality of processors integrated into a single logical component. For example, as shown in FIG. 2, the processor 202 may comprise a plurality of processors 202a, 202b and 202c.

The memory 204 may be configured to store data (e.g., instructions, computer code, etc.). As shown in FIG. 2, the data stored by the memory 204 may comprise program instructions (e.g., program instructions for implementing the image generation method of an embodiment of the present disclosure) as well as data to be processed (e.g., the memory may store configuration files of other modules, etc.). The processor 202 may also access the program instructions and data stored in the memory 204 and execute the program instructions to operate on the data to be processed. The memory 204 may comprise a volatile memory device or a non-volatile memory device. In some embodiments, the memory 204 may comprise a Random Access Memory (RAM), a Read Only Memory (ROM), an optical disk, a magnetic disk, a hard disk, a Solid State Drive (SSD), a flash memory, a memory stick, etc.

The network module 206 may be configured to provide the electronic device 200 with communication with other external devices via a network. The network may be any wired or wireless network capable of transmitting and receiving data. For example, the network may be a wired network, a local wireless network (e.g., Bluetooth, WiFi, Near Field Communication (NFC), etc.), a cellular network, the Internet or a combination thereof. It may be appreciated that the type of network is not limited to the foregoing specific examples. In some embodiments, the network module 306 may comprise any combination of any number of Network Interface Controllers (NICs), radio frequency modules, transceivers, modems, routers, gateways, adapters, cellular network chips, etc.

The peripheral interface 208 may be configured to connect the electronic device 200 with one or more peripheral devices to enable information input and output. For example, the peripheral device may include an input device such as a keyboard, a mouse, a touch pad, a touch screen, a microphone, or various types of sensors, and an output device such as a display, a speaker, a vibrator, an indicator light, etc.

The bus 210 may be configured to transmit information between various components (e.g., the processor 202, the memory 204, the network module 206 and the peripheral interface 208) of the electronic device 200, and may be for example an internal bus (e.g., a processor-memory bus), an external bus (a USB port, or a PCI-E bus), etc.

It should be noted that although the architecture of the electronic device 200 described above only shows the processor 202, the memory 204, the network module 206, the peripheral interface 208 and the bus 210, and the architecture of the electronic device 200 may further include other components necessary for normal operation in a specific implementation process. In addition, those skilled in the art may appreciate that the architecture of the electronic device 200 described above may also only include components necessary for implementing solutions of the embodiments of the present disclosure and does not necessarily include all the components shown in the figure.

In some applications, users often use sticker elements to process image data, to enrich the expression forms of image data such as pictures and videos. For example, the sticker elements are pasted directly into the pictures or videos. The conventional sticker images are typically made individually one by one by a designer. This making manner incurs high costs and long cycles, and to some extent, requires designers to possess certain artistic skills to create sticker images that meet aesthetic standards. However, ordinary users usually lack these skills of professional designers, and cannot make sticker images that match their own expectations. Therefore, how to improve the efficiency and effect of sticker image creation has become a pressing technical issue.

In view of the above, embodiments of the present disclosure provide an image generation method and apparatus, a device, a storage medium and a program product. A target image having transparent channel information is obtained by generating an initial image according to semantic information of a prompt text and information about an image style, and then performing a transparency process. Automatic generation of the sticker images can be achieved according to the user's prompt text and the desired image style without requiring manual production, and the production effect and production efficiency of the sticker images can be improved.

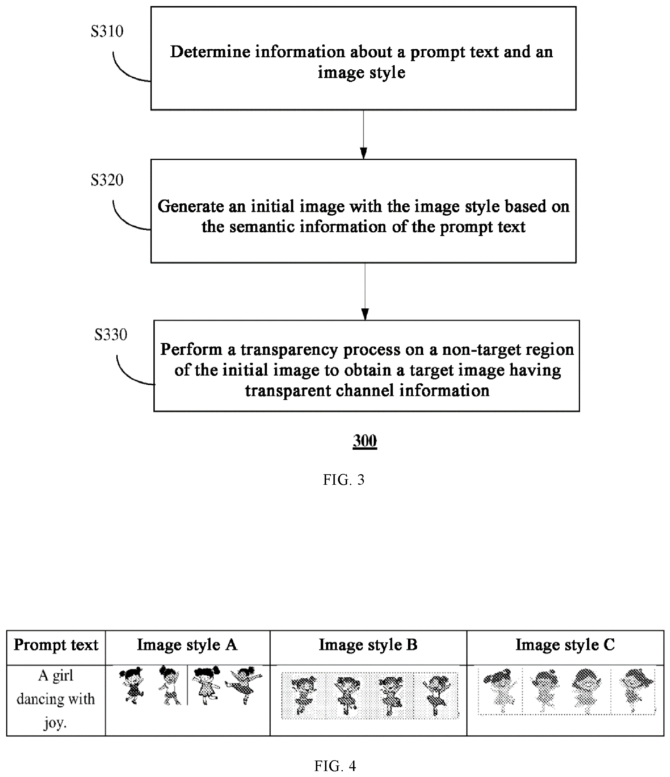

Referring to FIG. 3, which illustrates a schematic flow diagram of an image generation method according to an embodiment of the present disclosure. The image generation method according to the embodiment of the present disclosure may be deployed at a client. In FIG. 3, the image generation method 300 may further comprise the following steps.

At step S310, information about a prompt text and an image style is determined.

The prompt text is used for indicating the content of an image and has semantic information. Specifically, the prompt text may comprise an object, and may also comprise an action of the object, such as "A boy with bright smile". The image style may refer to a presentation style of the image, such as an oil painting style, a pixelated style, a cartoon style, a simple line-drawing style, and so on. It should be understood that the aforementioned image style attributes are merely examples and are not intended to be limited. The image style attributes may also include many styles, which will not be limited herein.

Specifically, the user may determine the information about the prompt text and the image style based on an interaction interface. For example, the user may enter the prompt text based on an input component in the interaction interface. Different image styles may be presented in the interaction interface, and may include at least one preset image style, such as image style A, image style B, image style C, etc. An image style may be set as a default value. When the user does not select the image style, an image is generated based on the image style corresponding to the default value. The user may also determine the image style of the image to be generated based on a selection operation (e.g., a click) of the image style in the interaction interface.

At step S320, an initial image with the image style is generated based on the semantic information of the prompt text.

The initial image has the semantic information corresponding to the prompt text. For example, if the prompt text is "A boy with bright smile", the content of the initial image may include a boy with a radiant smile. In addition, the initial image may also have the image style determined in step S310. For example, if the image style attribute determined in step S310 is an oil painting style, the boy with a radiant smile in the initial image may be presented in the oil painting style; if the image style determined in step S310 is a pixilated style, the boy with a radiant smile in the initial image may be presented in the pixilated style.

In some embodiments, the generating an initial image with the image style based on the semantic information of the prompt text comprises:
performing feature extraction on the prompt text to obtain a text feature;
determining an image feature having a corresponding semantic relationship with the text feature based on the semantic information;
selecting a corresponding image style attribute based on the information about the image style; and
obtaining an initial image with the image style based on the image style attribute and the image feature.

Specifically, feature extraction may be performed on a prompt text text to obtain a text feature F_text. Since the prompt text has semantic information, the text feature F_text may determine a corresponding image feature F_image based on the semantic information. For example, matching is performed in a set of image features based on the text feature F_text, to determine an image feature having the highest semantic similarity with the text feature F_text as the image feature F_image having a corresponding semantic relationship with the text feature F_text. The set of image features may be a pre-set database, and may be obtained by performing feature extraction based on image data. The set of image features may include at least one image feature having the semantic information. Then, a corresponding image style attribute type is determined based on the determined information about the image style. A corresponding initial image image_s_type having the image style attribute type may be generated based on the image style attribute type and the above-mentioned image feature F_image. For example, it is possible to obtain the text feature by performing feature extraction on the prompt text based on an image generation model, and then determine the image feature having a corresponding semantic relationship based thereon; then generate the initial image image_s_type having the image style attribute in conjunction with the image style attribute corresponding to the information about the image style.

In some embodiments, the generating an initial image with the image style based on the semantic information of the prompt text comprises:
inputting the information about the prompt text and the image style into an image generation model to obtain the initial image; wherein the image generation model is obtained based on a fusion of a text image network and a style attribute network.

The image generation model may generate the initial image with the image style based on the prompt text and the determined information about the image style. The image generation model may be obtained by fusing a text image network and a style attribute network, wherein the text image network may generate a corresponding image (or image feature) based on the prompt text, and the style attribute network may obtain the initial image with the image style by combining the image (or image feature) generated by the text image network and the determined image style.

In some embodiments, the obtaining the image generation model based on a fusion of a text image network and a style attribute network comprises:
training a neural network based on a first training sample to obtain a first weight matrix of the text image network; and training the neural network based on a second training sample to obtain a second weight matrix of the style attribute network; and
obtaining a weight matrix of the image generation model based on a product of the first weight matrix and the second weight matrix.

An initial neural network for example an initial diffusion model may be trained based on the first training sample, to obtain a duly-trained text image network whose layer weights form a first weight matrix Q1. The initial neural network for example the initial diffusion model may be trained based on the second training sample, to obtain a duly-trained style attribute network whose layer weights form a second weight matrix Q2. The weight matrix of the text image network and the weight matrix of the style attribute network are multiplied, and a resultant product result Q1*Q2 is taken as the weight matrix of the image generation model, to fuse the text image network and the style attribute network.

In some embodiments, the first training sample comprises a text image pair; the method further comprises:
performing feature extraction based on text samples in the text image pair to obtain a training text feature;
performing a denoising process on a random noise point image and performing a cross-attention computation on a result of the denoising process and the training text feature to obtain a first denoised image;
calculating a first loss function based on the image samples in the text image pair and the first denoised image; and
adjusting the weight of the neural network based on the first loss function to minimize the first loss function, to obtain the text image network.

An image complying with the aesthetic standard may be taken as a training image in the first training sample, and the text image network obtained by training based on the first training sample can output a high-quality image complying with the aesthetic standard and improve the effect of image generation. As such, the user is not required to have a certain degree of artistic skills, and any user may generate a high-quality image based on the prompt text. Specifically, the first training sample may comprise a text image pair which may further comprise a training text Text_training and a training image Image_training. Feature extraction may be performed on the training text Text_training to obtain a training text feature F_Text_training. At least one de-noising process may be performed on the random noise point image image_noisy (for example, de-noising with a pre-set number M1 of noise points), and cross-attention computation is performed on a result of each de-noising process and the training text feature F_Text_training to obtain a first de-noised image. That is to say, the process of guiding the de-noising process using the semantic characteristics of the training text feature enables the semantic characteristics of the image after each de-noising process to approach the training text feature continuously, and enables the first de-noised image corresponding to the semantic relationship of the training text feature to be obtained by prediction. The first denoised image predicted by the text image network may be compared with the training image in the first training sample to calculate a cross entropy loss function of the first denoised image and the training image in the first training sample; a sum of the cross entropy loss functions of all the first training samples is taken as the first loss function. During training, the weight parameters of the text image network are adjusted to minimize the first loss function.

In some embodiments, the second training sample comprises an image with the image style; the method further comprises:
adding noise based on the second training sample to obtain a noise image;
performing a denoising process on the noise image to obtain a second denoised image;
calculating a second loss function based on the second denoised image and the second training sample; and
adjusting the weight of the neural network based on the second loss function to minimize the second loss function, to obtain the style attribute network.

The image data annotated with the image style attribute may be taken as the second training sample, and the style attribute network obtained by training on the basis of the second training sample can output an image with a specified image style attribute. In this way, the user may produce an image meeting his own expectation based on the determined image style attribute, so that the user's demands for personalized image styles can be satisfied, and the user's experience be improved. In conjunction with the text image network, the user may generate a high-quality image of any style based on the image generation model just by determining the image style attribute and inputting the prompt text, which improves the effect and efficiency of image production. Specifically, for a case where the second training sample may include a style image Image_training_type annotated with an image style attribute type, at least one noise-adding process may be performed on the style image Image_training_type (a noise, i.e., a Gaussian noise, may be added based on a preset number M2 of noise points) to obtain a noise image Image_training_type_noisy. Then, at least one denoising process may be performed on the noise image (denoising may be performed based on a preset number M3 of noise points) to obtain a second de-noised image Image_training_type_denoisy. The second denoised image Image_training_type_denoisy may be compared with the style image Image_training_type in the second training sample to calculate a cross entropy loss of the two. A sum of the cross entropy loss functions of all the second training samples is taken as a second loss function. During training, the weight parameters of the style attribute network are adjusted to minimize the second loss function.

In step S330, a transparency process is performed on a non-target region of the initial image to obtain a target image having transparent channel information.

The sticker image differs from a non-sticker image in having a transparent channel (i.e., an alpha channel) as a characteristic. In order to allow the sticker image to finally display content of a main body only, the generated initial picture needs to be in a transparent state in portions except for the main body.

Specifically, referring to FIG. 4, which illustrates a schematic diagram of a target image of the present disclosure. In FIG. 4, the user may input a prompt text = "A girl dancing with joy" based on an interaction interface. It can be seen that the prompt text includes an object girl and an action dancing, and an initial image with the content "A girl dancing with joy" may be generated. When the user selects different image style attributes, at least one target image corresponding to the image style attribute may be obtained, for example, image style A, image style B, and image style C in FIG. 4. Then, the transparency process is performed on the initial image to set regions other than the object girl as transparent regions to obtain the target image. The sticker image may be used in any image I, whereupon a region of the object B may be displayed in the image I.

In some embodiments, the performing a transparency process on a non-target region of the initial image to obtain a target image having transparent channel information comprises:
performing target recognition based on the initial image to obtain a target region of the initial image; and
setting the target region as a non-transparent region, and setting a non-target region as a transparent region, and obtaining a target image having transparent channel information.

Color channel information and the transparent channel information in the image data having the transparent channel information may be learnt simultaneously based on an image processing model, to obtain a capability of performing a transparency process on the non-target region. Specifically, the initial neural network may be trained on the basis of image data Image_alpha having transparent channel information, for example, the transparent channel information may be removed from the first image data Image_RGB_alpha having the transparent channel information and color channel information to obtain a second image data Image_RGB containing only the color channel information, the initial neural network may be trained by taking the second image data Image_RGB as input layer data and taking the first image data Image_RGB_alpha as output layer data, to obtain a duly-trained image processing model. The initial image is input into the image processing model, to obtain a target image having the transparent channel information, i.e., the transparent channel information of the target region including the main body is a first numerical value (for example 1, namely, a non-transparent region), and the transparent channel information of the non-target region is a second numerical value (for example 0, namely, the transparent region).

In some embodiments, the performing a transparency process on a non-target region of the initial image to obtain a target image having transparent channel information comprises:
obtaining the target image having the transparent channel information by setting the transparent channel information of a first pixel whose color channel information is greater than or equal to a channel threshold value in the initial image as a first numerical value, and setting the transparent channel information of a second pixel whose color channel information is less than the channel threshold value as a second numerical value.

Each pixel in the initial image having the determined image style attribute has color channel information (for example, RGB channel information), for example, the color channel information of a pixel X comprises values of RGB channels being abc respectively (a, b and c are all in [0, 255]). The transparency process is performed on the non-target region of the initial image based on distribution of pixels. Specifically, since the main body in the initial image typically exhibits saliency, pixels above the channel threshold value in the color channel information may be taken as the target region, and remaining pixels are taken as the non-target region, so that the target region including the main body can be segmented out to obtain a target mask map. The transparent channel information of pixels in the target mask map is set as a first numerical value (e.g., 1), i.e., the non-transparent region; the transparent channel information of pixels in a region outside the target mask map is set as a second output (e.g., 0), i.e., the transparent region.

It should be noted that the method of the embodiment of the present disclosure may be performed by a single device, such as one computer or server. The method of the present embodiment may also be applied to a distributed scenario, and accomplished by a plurality of devices in cooperation with one another. In the case of such a distributed scenario, one device of the plurality of devices may only perform one or more of the steps of the method of the embodiment of the present disclosure, and the plurality of devices interact with one another to perform the method.

It should be noted that some embodiments of the present disclosure have been described above. Other embodiments are within the scope defined by the appended claims. In some cases, the acts or steps recited in the claims may be performed in an order different from that stated in the above embodiments and can still achieve a desired result. In addition, the desired result can be achieved not necessarily requiring the process depicted in the accompanying drawings to be performed in a specific order or a continuous order as illustrated. In some embodiments, a multi-task process and parallel process are also possible or might be advantageous.

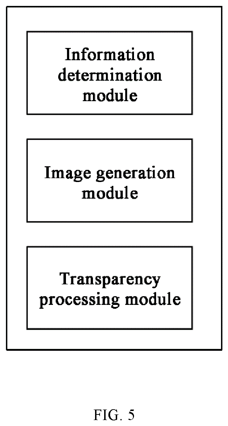

Based on the same technical concept, corresponding to the method according to any embodiment described above, the present disclosure further provides an image generation apparatus. Referring to FIG. 5, the image generation apparatus comprises:
an information determination module configured to determine information about a prompt text and an image style;
an image generation module configured to generate an initial image with the image style based on semantic information of the prompt text; and
a transparency processing module configured to perform a transparency process on a non-target region of the initial image to obtain a target image having transparent channel information.

For the convenience of description, the apparatus is divided into various modules according to functions, and the modules are described respectively. Certainly, when the present disclosure is implemented, the functions of the modules can be performed in one or more software and/or hardware.

The apparatus of the above embodiment is used to implement the corresponding image generation method in any of the foregoing embodiments, and has the advantageous effects of the corresponding method embodiments, which will not be described in detail herein.

Based on the same technical concept, corresponding to the method in any of the above embodiments, the present disclosure further provides a non-transitory computer-readable storage medium storing computer instructions for causing the computer to perform the image generation method according to any of the above embodiments.

The computer readable storage medium in the present embodiment includes permanent and non-permanent, removable and non-removable media, which may implement information storage by any method or technique. The information may be computer readable instructions, data structures, modules of a program, or other data. Examples of computer storage media include, but not limited to, Phase-Change Memory (PRAM), Static Random Access Memory (SRAM), Dynamic Random Access Memory (DRAM), other types of Random-Access Memory (RAM), Read-Only Memory (ROM), Electronically Erasable Programmable Read-Only Memory (EEPROM), flash memory or other memory storage technology, Compact Disk Read-Only Memory (CD-ROM), Digital Versatile Disc (DVD) or other optical storage, magnetic cassette tape, magnetic disk storage or other magnetic storage devices, or any other non-transmission media, which may be used to store information that may be accessed by a computing device.

The computer instructions stored in the storage medium of the above embodiment are used for causing the computer to execute the image generation method as described in any of the above embodiments, and has the advantageous effects of the corresponding method embodiments, which will not be described in detail herein.

One ordinary skilled in the art should appreciate that the discussion of any of the above embodiments is merely exemplary and is not intended to imply that the scope of the disclosure, including the claims, is limited to these examples. The above embodiments or technical features in different embodiments may also be combined according to the idea of the disclosure, the steps may be implemented in any order, and there are many other variations of different aspects of embodiments of the present disclosure as described above, which are not provided in detail for the sake of brevity.

In addition, well-known power/ground connections to integrated circuit (IC) chips and other components may be or may not be shown in the provided figures to simplify the illustration and discussion without obscuring the embodiments of the present disclosure. Furthermore, apparatus may be shown in block diagram form in order to avoid obscuring the embodiments of the present disclosure, and this also takes into account the fact that details regarding implementations of the apparatus shown in these block diagrams are highly dependent on the platform in which the embodiments of the present disclosure is to be implemented (i.e., such details should completely fall within the understanding of those skilled in the art). While specific details (e.g., circuits) have been set forth in order to describe exemplary embodiments of the present disclosure, it will be apparent to those skilled in the art that the embodiments of the present disclosure may be implemented without these specific details or with variations of these specific details. Accordingly, the description should be regarded as illustrative, and not as restrictive.

While the present disclosure has been described in conjunction with specific embodiments of the present disclosure, many substitutions, modifications and variations of these embodiments will be apparent to those skilled in the art in light of the foregoing description. For example, other memory architectures (e.g., dynamic RAM (DRAM)) may use the embodiments discussed.

The embodiments of the present disclosure are intended to embrace all such substitutions, modifications and variations that fall within the broad scope of the appended claims. Therefore, any omissions, modifications, equivalent substitutions, improvements and the like made without departing from the spirit and scope of embodiments of the present disclosure should all be included within the protection scope of the present disclosure.

## Claims

1. An image generation method, comprising:
determining information of a prompt text and an image style;
generating an initial image with the image style based on semantic information of the prompt text; and
performing a transparency process on a non-target region of the initial image to obtain a target image having transparent channel information.

2. The method according to claim 1, wherein generating the initial image with the image style based on the semantic information of the prompt text comprises:
performing feature extraction on the prompt text to obtain a text feature;
determining an image feature having a corresponding semantic relationship with the text feature based on the semantic information;
selecting a corresponding image style attribute based on information about the image style; and
obtaining the initial image with the image style based on the image style attribute and the image feature.

3. The method according to claim 1, wherein generating the initial image with the image style based on the semantic information of the prompt text comprises:
inputting the information about the prompt text and the image style into an image generation model to obtain the initial image; wherein the image generation model is obtained based on a fusion of a text image network and a style attribute network.

4. The method according to claim 3, wherein the image generation model is obtained based on the fusion of the text image network and the style attribute network by:
training a neural network based on a first training sample to obtain a first weight matrix of the text image network; and training the neural network based on a second training sample to obtain a second weight matrix of the style attribute network; and
obtaining a weight matrix of the image generation model based on a product of the first weight matrix and the second weight matrix.

5. The method according to claim 4, wherein the first training sample comprises a text image pair; and wherein the method further comprises:
performing feature extraction based on a text sample in the text image pair to obtain a training text feature;
performing a denoising process on a random noise point image and performing a cross-attention computation on a result of the denoising process and the training text feature to obtain a first denoised image;
calculating a first loss function based on an image sample in the text image pair and the first denoised image; and
adjusting a weight of the neural network based on the first loss function to minimize the first loss function, to obtain the text image network.

6. The method according to claim 4, wherein the second training sample comprises an image with the image style; and wherein the method further comprises:
adding noise based on the second training sample to obtain a noised image;
performing a denoising process on the noised image to obtain a second denoised image;
calculating a second loss function based on the second denoised image and the second training sample; and
adjusting the weight of the neural network based on the second loss function to minimize the second loss function, to obtain the style attribute network.

7. The method according to claim 1, wherein performing the transparency process on the non-target region of the initial image to obtain the target image having the transparent channel information comprises:
performing target recognition based on the initial image to obtain a target region of the initial image; and
setting the target region as a non-transparent region, and setting the non-target region as a transparent region, and obtaining the target image having the transparent channel information.

8. An image generation apparatus, comprising:
an information determination module configured to determine information about a prompt text and an image style;
an image generation module configured to generate an initial image with the image style based on semantic information of the prompt text; and
a transparency processing module configured to perform a transparency process on a non-target region of the initial image to obtain a target image having transparent channel information.

9. An electronic device, comprising a memory, a processor and a computer program stored on the memory and running on the processor, the processor, when executing the program, implements the method according to any of claims 1 to 7.

10. A non-transitory computer readable storage medium storing computer instructions for causing the computer to perform the method according to any of claims 1 to 7.

11. A computer program product comprising computer program instructions which, when running on a computer, cause the computer to perform the method according to any of claims 1 to 7.
